# FASCICULE DE BREVET EUROPEEN

(11) **EP 1 515 058 B1**
(45) Date de publication et mention de la délivrance du brevet: **26.07.2006**
(21) Numéro de dépôt: 04300576.8
(22) Date de dépôt: 07.09.2004
(51) Int. Cl.: F16D 23/12

(54) **Ensemble pour système de débrayage de véhicule automobile.**
Kupplungsausrücksystem eines Fahrzeuges
Clutch disengaging system for a motor vehicle

(30) Priorité: 11.09.2003 FR 0310696
(43) Date de publication de la demande: 16.03.2005
(73) Titulaire: COMPAGNIE PLASTIC OMNIUM, 69007 Lyon (FR)
(72) Inventeur: Pionnier, Jérôme, 52800 Nogent (FR); Broise, Sébastien, 52200 Langres (FR); Poinsel, Christophe, 52200 Langres (FR); Agnus, Bruno, 52000 Chaumont (FR); Boisset, Marcel, 52260 Chanoy (FR)
(74) Mandataire: Remy, Vincent Noel Paul

(56) Documents cités:
- EP-A- 0 379 392
- DE-C- 3 801 460
- FR-A- 2 722 262
- US-A- 4 773 516

## Description

La présente invention concerne un ensemble destiné à être mis en place sur la fourchette d'un système de débrayage de véhicule automobile, et un tel système, notamment pour une boîte de vitesses manuelle.

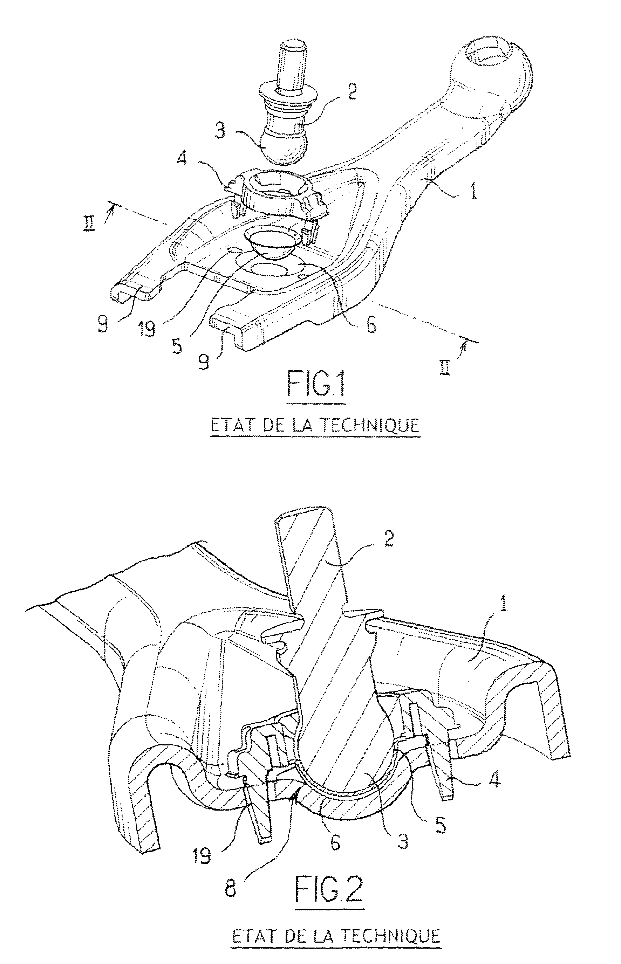

De manière connue, comme illustré sur les figures 1 et 2, un système de débrayage de véhicule automobile comporte une fourchette de débrayage 1, un axe de rotule 2 comportant un embout 3 ayant une surface en segment sphérique et un support 4 formant un logement dans lequel s'engage l'embout 3, de manière à définir une liaison de type rotule 8 entre la fourchette 1 et l'axe de rotule 2.

L'embout 3 s'applique sur un patin 5, en forme de calotte sphérique, disposé dans un renfoncement 6 de la fourchette 1, ce patin 5 formant une surface de glissement pour l'embout 3.

Ce système de débrayage fonctionne de la manière suivante.

Lorsqu'un utilisateur du véhicule automobile appuie sur la pédale de débrayage, la fourchette de débrayage 1, soit par l'intermédiaire d'un câble relié à la pédale de débrayage, soit par l'intermédiaire d'un mécanisme hydraulique tel qu'un vérin piloté par un distributeur lié à la pédale de débrayage, bascule autour de la liaison rotule 8. Ce basculement fait déplacer des becs 9 de la fourchette de débrayage 1, ce qui permet de provoquer le désaccouplement des disques de débrayage.

La fourchette 1 peut être réalisée en acier, par exemple en tôle emboutie ou en acier forgé.

L'axe de rotule 2, fixé sur le carter de la boîte de vitesses par exemple par vissage, peut être réalisé en acier.

Le patin 5 peut être réalisé en un matériau souple tel qu'un matériau contenant du PTFE et une grille métallique, ou rigide tel qu'un matériau contenant du PTFE et une plaque métallique.

Dans les systèmes de débrayage connus, le patin 5 n'est ni fixé sur la fourchette 1, ni sur le support 4.

Dans certains cas, le patin 5 est collé sur l'embout 3.

Les différentes pièces constituant le système de débrayage sont livrées généralement sans être assemblées.

La demande FR 2 722 262 décrit un dispositif de commande d'embrayage dans lequel la fourchette est équipée, avant sa mise en place sur une rotule, d'un corps de rotule fixé sur la fourchette par sertissage ou à l'aide de rivets.

La présente invention vise à proposer un système de débrayage de véhicule automobile permettant un assemblage aisé.

L'invention a ainsi pour objet un ensemble destiné à être mis en place sur la fourchette d'un système de débrayage de véhicule automobile conforme à la revendication 1.

Grâce à l'invention, il est possible d'assembler le patin avec le support sur un premier lieu de production et livrer le support avec le patin assemblé vers un deuxième lieu où le système de débrayage est assemblé entièrement. Ceci permet de simplifier le montage du système de débrayage.

L'assemblage du patin sur le support peut en outre être effectué de manière automatisée, notamment sur une machine conçue à cette fin.

De préférence, les moyens de retenue prévus sur le support sont agencés de manière à ménager un jeu entre le patin et le support permettant un déplacement relatif du patin par rapport au support.

L'invention permet ainsi d'assurer un centrage automatique du patin par rapport à la fourchette de débrayage et par rapport à l'axe de rotule, lors de l'assemblage du système de débrayage complet.

Le ou les reliefs de fixation peuvent être formés chacun par une patte élastiquement déformable.

En variante, le ou les reliefs peuvent être formés chacun par un picot apte à être aplati, notamment par bouterollage.

En variante encore, le relief de fixation peut être formé par une lèvre annulaire apte à être déformée, notamment par bouterollage.

La portion du patin en appui sur la ou les portées est de préférence une portion périphérique du patin, lequel peut comporter une portion périphérique annulaire sensiblement plane.

Dans un exemple de mise en oeuvre de l'invention, le support comporte une paroi intérieure cylindrique, et la ou les portées sont formées sur une ou plusieurs formes en saillie de cette paroi intérieure.

Le support peut être réalisé d'un seul tenant en matière thermoplastique, notamment par moulage par injection.

Le patin peut être réalisé en un matériau choisi parmi : un matériau contenant du PTFE et une grille métallique, une matière thermoplastique, notamment un polyamide chargé, un polyimide, du POM, du PPS ou du PEEK, cette liste n'étant pas limitative.

L'invention a encore pour objet un système de débrayage de véhicule automobile, comportant :
- une fourchette de débrayage,
- un axe de rotule comportant un embout,
- un ensemble tel que défini plus haut, fixé sur la fourchette de débrayage.

Dans un exemple de mise en oeuvre de l'invention, la fourchette de débrayage comporte un ou plusieurs orifices et le support comporte une ou plusieurs pattes, notamment élastiquement déformables, aptes à s'engager dans le ou les orifices de la fourchette, permettant la fixation du support sur la fourchette.

L'invention a encore pour objet un procédé de fabrication d'un ensemble destiné à équiper un système de débrayage de véhicule automobile, caractérisé par le fait qu'il comporte les étapes suivantes :
- fournir un patin formant une surface de glissement pour un embout d'un axe de rotule du système de débrayage,
- fournir un support comportant un logement pour recevoir l'embout de l'axe de rotule et agencé pour permettre la fixation du patin sur le support,
- fixer le patin sur le support, de préférence préalablement au montage dudit ensemble sur une fourchette de débrayage du système de débrayage.

Le support peut comporter un ou plusieurs reliefs de fixation aptes à être déformés, notamment par bouterollage, afin de permettre le maintien du patin sur le support.

La déformation du relief de fixation peut s'effectuer à température ambiante.

En variante, préalablement à la déformation du relief de fixation, le support peut être chauffé.

En variante encore, la déformation du relief de fixation peut s'effectuer à l'aide d'un outil préchauffé ou d'un outil sur lequel sont générés des ultrasons.

L'invention sera mieux comprise à la lecture de la description détaillée qui va suivre, d'exemples de mise en oeuvre non limitatifs de l'invention, et à l'examen du dessin annexé, sur lequel :
- la figure 1 représente, schématiquement et partiellement, en perspective, différentes pièces constitutives d'un système de débrayage connu de l'état de la technique, avant assemblage,
- la figure 2 est une vue schématique et partielle, en coupe selon II-II, du système de débrayage de la figure 1, après assemblage,
- les figures 3 et 4 représentent, schématiquement et partiellement, en perspective, respectivement de dessous et de dessus, un ensemble conforme à l'invention comportant un support et un patin,
- la figure 5 représente, schématiquement et partiellement, en perspective, un support conforme à un autre exemple de mise en oeuvre de l'invention,
- la figure 6 représente, schématiquement et partiellement, en perspective, le support de la figure 5, avec un patin fixé dessus,
- la figure 7 représente, schématiquement et partiellement, en perspective, un support conforme à un autre exemple de mise en oeuvre de l'invention, et
- la figure 8 représente, schématiquement et partiellement, en perspective, le support de la figure 7, avec un patin fixé dessus.

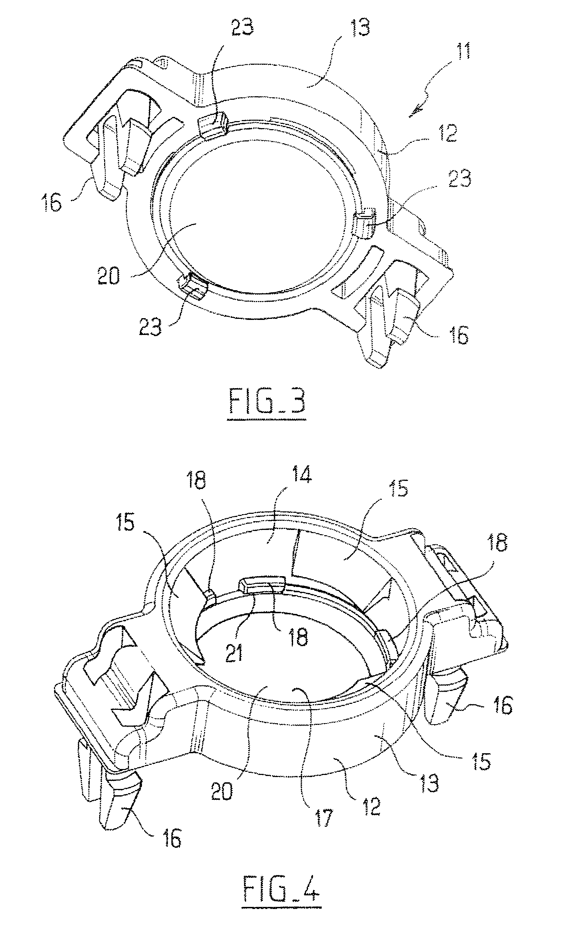

On a représenté sur la figure 3 un ensemble 11 conforme à l'invention, destiné à équiper un système de débrayage de véhicule automobile analogue à celui décrit en référence aux figures 1 et 2.

Cet ensemble 11 comprend un support 12 comportant une bague 13 pourvue d'une paroi intérieure cylindrique 14, comme on peut le voir sur la figure 4.

Le support 12 est réalisé par moulage par injection d'une matière thermoplastique.

La bague 13 définit un logement 17 pour l'embout 3 de l'axe de rotule 2 et est munie d'une pluralité de languettes 15 formant des butées pour retenir l'embout 3 dans le logement 17.

Le support 12 comporte, de part et d'autre de la bague 13, deux pattes de fixation 16 aptes à s'engager dans des orifices 19 de la fourchette de débrayage 1.

Le support 12 comporte en outre des dents 18 faisant saillie sur la paroi intérieure cylindrique 14 et formant des portées sur lesquelles vient s'appliquer une portion périphérique annulaire sensiblement plane 21 d'un patin 20.

Ce patin 20 présente une forme générale de calotte sphérique et peut être réalisé en un matériau souple, contenant notamment du PTFE et une grille métallique ou, en variante, en une matière thermoplastique ayant des propriétés tribologiques satisfaisantes, notamment un polyamide chargé, du POM, du PPS ou du PEEK.

Le patin 20 est positionné sur les portées 18 et maintenu dessus à l'aide d'une pluralité de reliefs de fixation 23 réalisés d'un seul tenant avec le support 12.

Ces reliefs de fixation 23, dans l'exemple considéré, sont formés chacun par une patte élastiquement déformable de sorte que le patin 20 peut être mis en place sur le support 12 par encliquetage.

Le patin 20 peut, en variante, être mis en place sur le support 12 en écartant préalablement les pattes élastiquement déformables 23 à l'aide d'un outil approprié, puis en disposant le patin 20 sur les portées 18 avant de permettre le retour élastique des pattes 23.

Comme on peut le constater, l'ensemble 11 constitué du support 12 et du patin 20 peut être livré à l'état assemblé.

Dans l'exemple considéré, le patin 20 est fixé sur le support 12 avec un jeu permettant au patin 20 d'être centré automatiquement lors du montage du système de débrayage complet.

Le patin 20 peut être fixé sur le support 12 d'une manière différente.

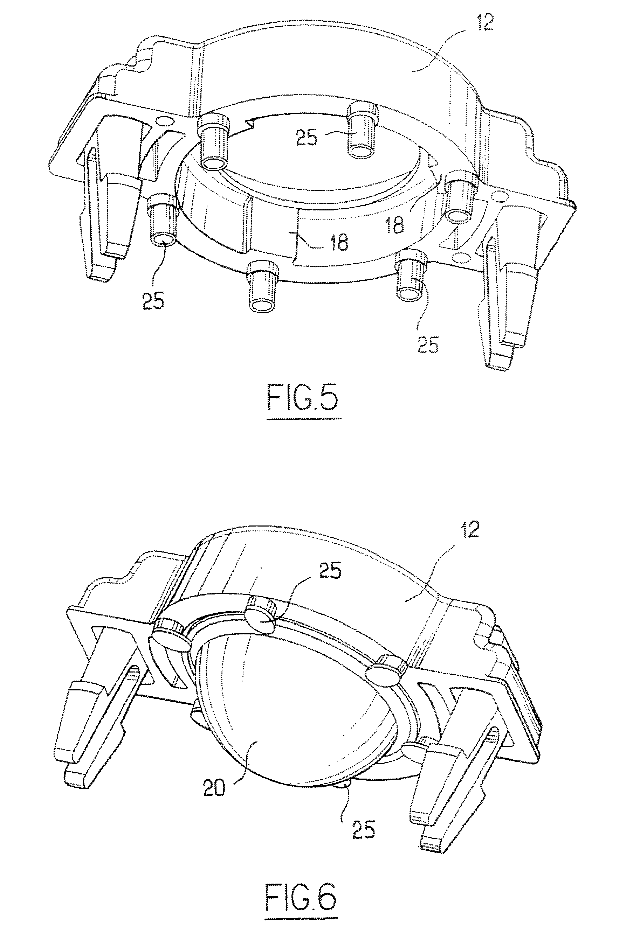

Dans l'exemple décrit en référence aux figures 5 et 6, le support 12 comporte une pluralité de picots 25 aptes à être aplatis, notamment par bouterollage, lesquels picots permettent, après mise en place du patin 20 sur les portées 18 et déformation des picots 25, de retenir ce patin 20.

Dans l'exemple considéré, les picots 25 présentent une forme sensiblement cylindrique sur toute leur hauteur.

En variante, les picots peuvent présenter une forme différente, par exemple en tête de clou, ronde ou oblongue, ou être constitués par une patte repliée.

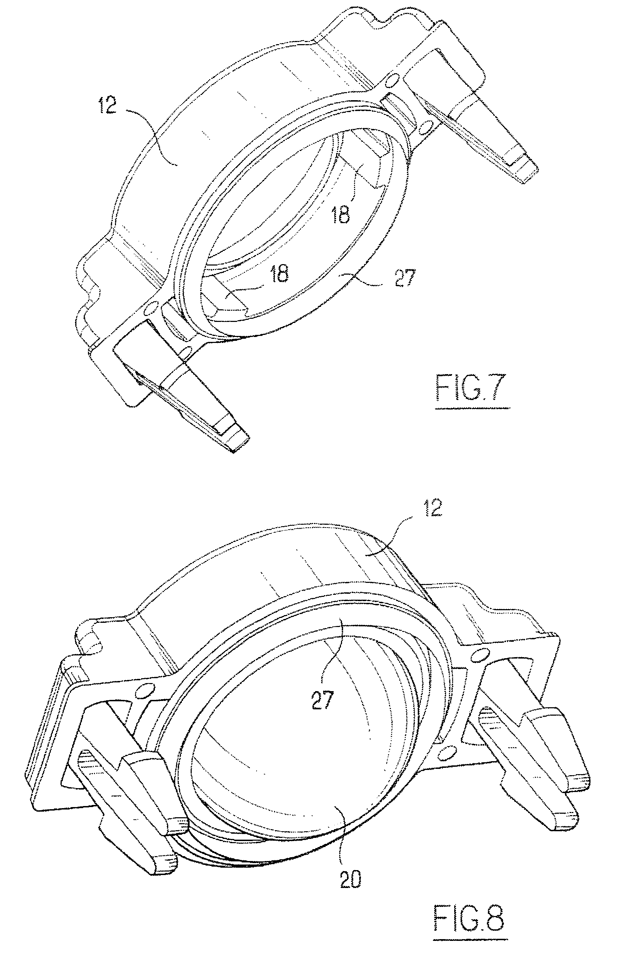

On a représenté sur les figures 7 et 8 un support 12 comportant un relief de fixation constitué d'une lèvre annulaire 27 pouvant être déformée, notamment par bouterollage, et permettant, à l'état déformé, de retenir le patin 20 sur les portées 18.

Dans l'exemple considéré, la lèvre annulaire 27 est ininterrompue.

En variante, celle-ci peut être interrompue en un ou plusieurs emplacements.

La déformation du ou des reliefs de fixation peut s'effectuer de différentes manières.

La déformation du relief de fixation peut par exemple s'effectuer à température ambiante.

En variante, préalablement à la déformation du relief de fixation, le support peut être chauffé.

En variante, la déformation du relief de fixation peut s'effectuer à l'aide d'un outil préchauffé ou encore à l'aide d'un outil sur lequel sont générés des ultrasons.

Bien entendu, l'invention n'est pas limitée aux exemples de mise en oeuvre qui viennent d'être décrits.

## Revendications

1. Ensemble (11) destiné à être mis en place sur la fourchette d'un système de débrayage de véhicule automobile, ledit ensemble comportant :
- un patin (20) formant une surface de glissement pour un embout (3) d'un axe de rotule (2) du système de débrayage,
- un support (12) comprenant un logement (17) pour recevoir l'embout (3) de l'axe de rotule (2),
**caractérisé par le fait que** le support (12) comporte des moyens de retenue (18 ; 23 ; 25 ; 27) pour permettre la fixation du patin (20) sur le support (12), les moyens de retenue comportant une ou plusieurs portées (18) sur laquelle ou lesquelles s'applique au moins une portion du patin, et un ou plusieurs reliefs de fixation (23 ; 25 ; 27) agencés pour maintenir le patin en appui sur la ou les portées (18).

2. Ensemble selon la revendication 1, **caractérisé par le fait que** les moyens de retenue prévus sur le support (12) sont agencés de manière à ménager un jeu entre le patin et le support permettant un déplacement relatif du patin (20) par rapport au support (12).

3. Ensemble selon la revendication 1 ou 2, **caractérisé par le fait que** le ou les reliefs de fixation sont formés chacun par une patte élastiquement déformable (23).

4. Ensemble selon la revendication 1 ou 2, **caractérisé par le fait que** le ou les reliefs sont formés chacun par un picot (25) apte à être aplati, notamment par bouterollage

5. Ensemble selon la revendication 1 ou 2, **caractérisé par le fait que** le relief de fixation est formé par une lèvre annulaire (27) apte à être déformée, notamment par bouterollage.

6. Ensemble selon l'une quelconque des revendications précédentes, **caractérisé par le fait que** la portion du patin en appui sur la ou les portées est une portion périphérique (21) du patin (20).

7. Ensemble selon l'une quelconque des revendications précédentes, **caractérisé par le fait que** le patin (20) comporte une portion périphérique annulaire sensiblement plane (21).

8. Ensemble selon l'une quelconque des revendications précédentes, le support comportant une paroi intérieure cylindrique (14), **caractérisé par le fait que** la ou les portées (18) sont formées sur une ou plusieurs formes en saillie de la paroi intérieure (14).

9. Ensemble selon l'une quelconque des revendications précédentes, **caractérisé par le fait que** le support (12) est réalisé d'un seul tenant en matière thermoplastique, notamment par moulage par injection.

10. Ensemble selon l'une quelconque des revendications précédentes, **caractérisé par le fait que** le patin (20) est réalisé en un matériau choisi parmi : un matériau contenant du PTFE et une grille métallique, une matière thermoplastique, notamment un polyamide chargé, un polyimide, du POM, du PPS ou du PEEK.

11. Système de débrayage de véhicule automobile, comportant :
- une fourchette de débrayage (1),
- un axe de rotule (2) comportant un embout (3),
- un ensemble (11) défini dans l'une quelconque des revendications 1 à 10, fixé sur la fourchette de débrayage (1).

12. Système de débrayage selon la revendication 11, **caractérisé par le fait que** la fourchette de débrayage (1) comporte un ou plusieurs orifices et **par le fait que** le support comporte une ou plusieurs pattes (16), notamment élastiquement déformables, aptes à s'engager dans le ou les orifices (19) de la fourchette, permettant la fixation du support sur la fourchette.

13. Procédé de fabrication d'un ensemble (11) défini dans l'une des revendications 1 à 10 destiné à équiper un système de débrayage de véhicule automobile, **caractérisé par le fait qu'**il comporte les étapes suivantes :
- fournir un patin (20) formant une surface de glissement pour un embout (3) d'un axe de rotule (2) du système de débrayage,
- fournir un support (12) comportant un logement (17) pour recevoir l'embout (3) de l'axe de rotule (2) et agencé pour permettre la fixation du patin sur le support,
- fixer le patin sur le support, à l'aide de moyens de retenue du support, les moyens de retenue comportant une ou plusieurs portées (18) sur laquelle ou lesquelles s'applique au moins une portion du patin, et un ou plusieurs reliefs de fixation (23 ; 25 ; 27) agencés pour maintenir le patin en appui sur la ou les portées (18).

14. Procédé selon la revendication 13, **caractérisé par le fait que** le support (12) comporte un ou plusieurs reliefs de fixation (25 ; 27) aptes à être déformés, notamment par bouterollage, afin de permettre le maintien du patin sur le support.

15. Procédé selon la revendication 14, **caractérisé par le fait que** la déformation du relief de fixation s'effectue à température ambiante.

16. Procédé selon la revendication 14, **caractérisé par le fait que**, préalablement à la déformation du relief de fixation, le support est chauffé.

17. Procédé selon la revendication 14, **caractérisé par le fait que** la déformation du relief de fixation s'effectue à l'aide d'un outil préchauffé.

18. Procédé selon la revendication 14, **caractérisé par le fait que** la déformation du relief de fixation s'effectue à l'aide d'un outil sur lequel sont générés des ultrasons.

## Claims

1. An assembly (11) designed for putting into place on the fork of a motor vehicle clutch-release system, said assembly comprising :
• a shoe (20) forming a sliding surface for an endpiece (3) of a ball pin (2) of the clutch-release system ;
• a support (12) including a housing (17) for receiving the endpiece (3) of the ball pin (2),
**characterized in that** the support (12) includes retaining means (18 ; 23 ; 25 ; 27) for enabling the shoe (20) to be fastened to the support (12), retaining means comprising one or more bearing surfaces (18) against which at least a portion of the shoe comes to bear, and one or more fastening portions in relief (23 ; 25 ; 27) arranged to hold the shoe bearing against the bearing surface(s) (18).

2. An assembly according to claim 1, **characterized in that** the retaining means provided on the support (12) are arranged in such a manner as to leave clearance between the shoe and the support, enabling the shoe (20) to move relative to the support (12).

3. An assembly according to claim 1 or 2 **characterized in that** the or each fastening portion in relief is formed by an elastically deformable tab (23).

4. An assembly according to claim 1 or 2, **characterized in that** the or each fastening portion in relief is formed by a stud (25) suitable for being flattened, in particular by a riveting die.

5. An assembly according to claim 1 or 2, **characterized in that** the fastening portion in relief is formed by an annular lip (27) suitable for being deformed, in particular by a riveting die.

6. An assembly according to any one of claims 1 to 5, **characterized in that** the portion of the shoe bearing against the bearing surface(s) is a peripheral portion (21) of the shoe (20).

7. An assembly according to any one of claims 1 to 6, **characterized in that** the shoe (20) includes an annular peripheral (21) portion that is substantially plane.

8. An assembly according to any one of claims 1 to 7, the support having a cylindrical inside wall (14), **characterized in that** the bearing surface(s) (18) is/are formed on one or more shapes projecting from the inside wall (14).

9. An assembly according to any one of claims 1 to 8, **characterized in that** the support (12) is made all in one piece of thermoplastic material, in particular by injection molding.

10. An assembly according to any one of claim 1 to 9, **characterized in that** the shoe (20) is made of a material selected from : a material containing PTFE and a metal grid, a thermoplastic material, in particular a filled polyamide, a polyimide, POM, PPS, or PEEK.

11. A motor vehicle clutch-release system comprising :
• a clutch-release fork (1) ;
• a ball pin (2) including an endpiece (3) ;
• an assembly (11) as defined in any one of claims 1 to 10, fixed on the clutch-release fork (1).

12. A clutch-release system according to claim 11, **characterized in that** the clutch-release fork (1) includes one or more orifices and **in that** the support includes one or more tabs (16), in particular elastically deformable tabs, suitable for engaging in the orifice(s) (19) of the fork, enabling the support to be fastened on the fork.

13. A method of manufacturing an assembly defined in any one of claims 1 to 10, designed for fitting to a motor vehicle clutch-release system, **characterized in that** the method comprises the following steps :
• providing a shoe (20) forming a sliding surface for an endpiece (3) of a ball pin (2) of the clutch-release system ;
• providing a support (12) including a housing (7) for receiving the endpiece (3) of the ball pin (2) and arranged to enable the shoe to be fastened to the support ;
• fastening the shoe to the support, by mean of retaining means provided on the support, retaining means comprising one or more bearing surfaces (18) against which at least a portion of the shoe comes to bear, and one or more fastening portions in relief (23 ; 25 ; 27) arranged to hold the shoe bearing against the bearing surface(s) (18).

14. A method according to claim 13, **characterized in that** the support (12) includes one or more fastening portions in relief (25, 27) that are suitable for being deformed, in particular by a riveting die, for the purpose of holding the shoe on the support.

15. A method according to claim 14, **characterized in that** the fastening portion in relief is deformed at ambient temperature.

16. A method according to claim 14, **characterized in that**, prior to deforming the fastening portion in relief, the support is heated.

17. A method according to claim 14, **characterized in that** the fastening portion in relief is deformed using a preheated tool.

18. A method according to claim 14, **characterized in that** the fastening portion in relief is deformed using a tool on which ultrasound is generated.

## Patentansprüche

1. Einheit (11), die dazu bestimmt ist, auf der Gabel eines Kupplungssystems eines Kraftfahrzeugs angeordnet zu werden, wobei die Einheit umfasst:
- ein Gleitstück (20), das eine Gleitfläche für einen Ansatz (3) einer Drehgelenksachse (2) des Kupplungssystems bildet,
- eine Stütze (12), die eine Lagerung (17) umfasst, um den Ansatz (3) der Drehgelenksachse (2) aufzunehmen,
**dadurch gekennzeichnet, dass** die Stütze (12) Haltemittel (18; 23; 25, 27) umfasst, um die Befestigung des Gleitstücks (20) auf dem Träger (12) zu ermöglichen, wobei die Haltemittel eine oder mehrere Flächen (18), an die mindestens ein Abschnitt des Gleitstücks angelegt wird, und einen oder mehrere Befestigungsvorsprünge (23; 25; 27) umfassen, die derart angeordnet sind, dass sie das Gleitstück an der oder den Flächen (18) angelegt halten.

2. Einheit nach Anspruch 1, **dadurch gekennzeichnet, dass** die auf der Stütze (12) vorgesehenen Haltemittel derart angeordnet sind, dass sie ein Spiel zwischen dem Gleitstück und der Stütze frei lassen, das eine relative Verschiebung des Gleitstücks (20) in Bezug auf die Stütze (12) ermöglicht.

3. Einheit nach Anspruch 1 oder 2, **dadurch gekennzeichnet, dass** der oder die Befestigungsvorsprünge jeweils von einem elastisch verformbaren Befestigungseisen (23) gebildet sind.

4. Einheit nach Anspruch 1 oder 2, **dadurch gekennzeichnet, dass** der oder die Befestigungsvorsprünge jeweils von einem Keil (25) gebildet sind, der insbesondere durch Schellen abgeflacht werden kann.

5. Einheit nach Anspruch 1 oder 2, **dadurch gekennzeichnet, dass** der Befestigungsvorsprung von einer Ringlippe (27) gebildet ist, die insbesondere durch Schellen verformt werden kann.

6. Einheit nach einem der vorgenannten Ansprüche, **dadurch gekennzeichnet, dass** der Abschnitt des Gleitstücks, der auf der oder den Flächen aufliegt, ein Umfangsabschnitt (21) des Gleitstücks (20) ist.

7. Einheit nach einem der vorhergehenden Ansprüche, **dadurch gekennzeichnet, dass** das Gleitstück (20) einen im Wesentlichen flachen ringförmigen Umfangsabschnitt (21) umfasst.

8. Einheit nach einem der vorhergehenden Ansprüche, wobei die Stütze eine zylindrische Innenwand (14) umfasst, **dadurch gekennzeichnet, dass** die Fläche(n) (18) auf einer oder mehreren vorspringenden Formen der Innenwand (14) ausgebildet sind.

9. Einheit nach einem der vorhergehenden Ansprüche, **dadurch gekennzeichnet, dass** die Stütze (12) aus einem Stück aus Thermoplast insbesondere durch Spritzguss hergestellt ist.

10. Einheit nach einem der vorhergehenden Ansprüche, **dadurch gekennzeichnet, dass** das Gleitstück (20) aus einem Material hergestellt ist, das ausgewählt wird unter: einem Material, das PTFE und ein Metallgitter enthält, einem Thermoplast, insbesondere einem Polyamid mit Füllstoffen, einem Polyimid, POM, PPS oder PEEK.

11. Kupplungssystem eines Kraftfahrzeugs, umfassend:
- eine Kupplungsgabel (1),
- eine Drehgelenksachse (2) mit einem Ansatz (3),
- eine Einheit (11), wie in einem der Ansprüche 1 bis 10 definiert, die auf der Kupplungsgabel (1) befestigt ist.

12. Kupplungssystem nach Anspruch 11, **dadurch gekennzeichnet, dass** die Kupplungsgabel (1) eine oder mehrere Öffnungen umfasst, und **dadurch**, dass die Stütze ein oder mehrere Befestigungseisen (16) umfasst, die insbesondere elastisch verformbar und in der Lage sind, in die Öffnung(en) (19) der Gabel einzugreifen, wodurch die Befestigung der Stütze auf der Gabel möglich ist.

13. Verfahren zur Herstellung einer Einheit (11), wie in einem der Ansprüche 1 bis 10 definiert, die dazu bestimmt ist, in ein Kupplungssystem eines Kraftfahrzeugs eingebaut zu werden, **dadurch gekennzeichnet, dass** es die folgenden Schritte umfasst:
- Bereitstellung eines Gleitstücks (20), das eine Gleitfläche für einen Ansatz (3) einer Drehgelenksachse (2) eines Kupplungssystems bildet,
- Bereitstellung einer Stütze (12), umfassend eine Lagerung (17), um den Ansatz (3) der Drehgelenksachse (2) aufzunehmen, und derart angeordnet, dass sie die Befestigung des Gleitstücks auf der Stütze ermöglicht,
- Befestigung des Gleitstücks auf der Stütze mit Hilfe von Haltemitteln der Stütze.

14. Verfahren nach Anspruch 13, **dadurch gekennzeichnet, dass** die Stütze (12) einen oder mehrere Befestigungsvorsprünge (25; 27) umfasst, die insbesondere durch Schellen verformt werden, um das Halten des Gleitstücks auf der Stütze zu ermöglichen.

15. Verfahren nach Anspruch 14, **dadurch gekennzeichnet, dass** die Verformung des Befestigungsvorsprungs bei Raumtemperatur erfolgt.

16. Verfahren nach Anspruch 14, **dadurch gekennzeichnet, dass** vor der Verformung des Befestigungsvorsprungs die Stütze erhitzt wird.

17. Verfahren nach Anspruch 14, **dadurch gekennzeichnet, dass** die Verformung des Befestigungsvorsprungs mit Hilfe eines vorerhitzten Werkzeugs erfolgt.

18. Verfahren nach Anspruch 14, **dadurch gekennzeichnet, dass** die Verformung des Befestigungsvorsprungs mit Hilfe eines Werkzeugs erfolgt, auf dem Ultraschall erzeugt wird.
